# EUROPÄISCHE PATENTSCHRIFT

(11) **EP 2 758 278 B1**
(45) Veröffentlichungstag und Bekanntmachung des Hinweises auf die Patenterteilung: **02.11.2016**
(21) Anmeldenummer: 12753510.2
(22) Anmeldetag: 04.09.2012
(51) Int. Cl.: B60R 13/02, B60R 13/04, B60J 5/04, B29C 45/00

(54) **SÄULENABDECKUNG FÜR KRAFTFAHRZEUGE**
COLUMN COVER FOR MOTOR VEHICLES
HABILLAGE DE MONTANT POUR VÉHICULES AUTOMOBILES

(30) Priorität: 23.09.2011 EP 11182543
(43) Veröffentlichungstag der Anmeldung: 30.07.2014
(73) Patentinhaber: Saint-Gobain Glass France, 92400 Courbevoie (FR)
(72) Erfinder: RIEGLER, Ulrich, 31698 Lindhorst (DE); BLANCHE, Luc-Henry, 71409 Schwaikheim (DE); SCHMIDT, Sebastian, 70176 Stuttgart (DE)
(74) Vertreter: Gebauer, Dieter Edmund
(86) Internationale Anmeldenummer: PCT/EP2012/067199
(87) Internationale Veröffentlichungsnummer: WO 2013/041369

(56) Entgegenhaltungen:
- EP-A1- 1 695 808
- EP-A1- 2 272 718
- DE-A1- 3 831 274
- DE-A1-102007 024 149
- DE-U1- 20 201 528
- DE-U1-202004 006 873
- JP-A- 2009 029 252

## Beschreibung

Die Erfindung betrifft eine Säulenabdeckung für Kraftfahrzeuge und deren Verwendung.

Im Zuge immer strengerer Vorgaben zur Kohlendioxidemission von Kraftfahrzeugen gibt es starke Bestrebungen, das Gewicht eines Fahrzeugs und damit dessen Treibstoffverbrauch zu senken. Stetige Weiterentwicklungen im Bereich der Kunststoffe ermöglichen den Ersatz von großen Teilen der Metallkarosserie durch entsprechend leichtere Elemente aus polymeren Werkstoffen. Insbesondere Teile oder auch der gesamte Fensterbereich können durch Elemente aus polymeren Werkstoffen ersetzt werden. Diese zeigen in vielen Fällen bei einem deutlich niedrigeren Gewicht eine vergleichbare Härte, Stabilität und Belastbarkeit wie bei einem Karosseriefenster aus Stahl. Zusätzlich wird auf Grund der Gewichtsreduzierung der Schwerpunkt des Fahrzeugs weiter nach unten verlagert, was einen positiven Einfluss auf das Fahrverhalten hat. Zudem können polymere Werkstoffe im Vergleich zu Metallen bei deutlich niedrigeren Temperaturen hergestellt, bearbeitet und verformt werden. Dies senkt den Energiebedarf und die Kosten bei der Herstellung der Werkstoffe.

Formteile aus polymeren Werkstoffen können dabei in praktisch jeder gewünschten Form und Geometrie hergestellt werden. Spezielle Hochleistungskunststoffe wie Aramide, beispielsweise Kevlar weisen sehr hohe Festigkeiten und Stabilitäten auf.

Viele Werkstoffteile aus Kunststoffen müssen verschiedenen Anforderungen und Funktionen gerecht werden. Wichtige Parameter sind hierbei die Stabilität, Bruchverhalten, Kratzfestigkeit, Schlagzähigkeit oder Kerbschlagzähigkeit. Neben technischen Gesichtspunkten wie Gewicht und Festigkeit der einzelnen Bauteile spielen auch die Form, Geometrie und das Aussehen eine zunehmend wichtigere Rolle. Vor allem in der Automobilindustrie sind neben mechanischen Eigenschaften auch Merkmale im Bereich des Designs und der Ästhetik von großer Bedeutung.

Um verschiedene Merkmale in polymeren Werkstoffen zu vereinen, werden diese aus unterschiedlich geformten und aus unterschiedlich beschaffenen Grundmaterialien zusammengesetzt. Etablierte Verfahren zur Herstellung dieser Werkstoffe umfassen zwei oder mehr Komponenten Spritzgussverfahren. Auf diese Art und Weise ist es möglich, Merkmale wie beispielsweise Witterungsbeständigkeit, Oberflächenglanz und Bruchbeständigkeit oder Torsionsstabilität miteinander zu vereinen. Zudem können die Anteile sehr teurer Werkstoffe reduziert werden.

DE 196 33 959 A1 offenbart einen Formkörper aus einem Träger und einem äußeren Zierfilm. Der äußere Film besitzt eine Zier- und eine Schutzschicht, wobei die Schutzschicht aus einer photopolymerisierbaren Harzzusammensetzung besteht.

WO 2006/094484 A1 offenbart ein Verfahren zur Herstellung eines flächigen, zwei Komponenten enthaltenden Kunststoffkarosserieteils. In einer bevorzugten Ausführungsform bestehen die erste Komponente aus einem transparenten Polycarbonat und die zweite Komponente aus einem opaken Polycarbonat.

DE 197 22 551 A1 offenbart ein Verfahren zur Herstellung von Kunststoffteilen im ZweiKomponenten-Spritzgussverfahren.

EP 1 695 808 A1 offenbart ein Zierteil für ein Kraftfahrzeug, beispielsweise eine Zierleiste. Das Zierteil umfasst ein Trägerteil aus einem thermoplastischen Kunststoff und ein Deckteil. Das Zierteil wird bevorzugt über einen Mehrkomponenten-Spritzgussprozess hergestellt.

DE 10 2007 024149 A1 zeigt eine Säulenabdeckung für Fahrzeuge nach dem Oberbegriff von Anspruch 1, mit einem abstehenden, integrierten Fensterführungssteg und einem abstehenden Montageelement, wobei eine polygonale Oberflächenstruktur vorgesehen ist.

Um das Gewicht der Säulenabdeckung weiter zu reduzieren, können die abstehenden Bauteile wie beispielsweise der Fensterführungssteg ausgedünnt werden. Um gleichzeitig die Stabilität zu erhöhen und die Bruchgefahr der abstehenden ausgedünnten Bauteile zu minimieren, werden von außen im ausgedünnten Bereich Verstärkungsrippen angespritzt. Diese Verstärkungsrippen können die Bruchstabilität des abstehenden, ausgedünnten Bauteils jedoch nur geringfügig erhöhen. Zudem können außen angespritzte Verstärkungsrippen aufgrund des höheren Platzbedarfs den Einbau der Säulenabdeckung erschweren und die Fahrwege möglicher Werkzeugschieber blockieren.

Die Erfindung hat die Aufgabe, ein Werkstück bereitzustellen, welches im Bereich einer abstehenden und/oder ausgedünnten Komponente eine erhöhte Festigkeit und Bruchstabilität aufweist.

Die Aufgabe der Erfindung wird durch eine Säulenabdeckung für Fahrzeuge gemäß Anspruch 1 gelöst. Bevorzugte Ausführungen gehen aus den Unteransprüchen hervor.

Die erfindungsgemäße Verwendung der Säulenabdeckung für Fahrzeuge geht aus einem nebengeordneten Anspruch hervor. Bevorzugte Ausführungen gehen aus den Unteransprüchen hervor.

Die erfindungsgemäße Säulenabdeckung für Fahrzeuge umfasst mindestens ein polymeres Trägerteil mit einem integrierten Fensterführungssteg und einem Montageelement. Das polymere Trägerteil sorgt für die Stabilität der Säulenabdeckung und beinhaltet polymere Materialien, bevorzugt thermoplastische Polymere, mit einer möglichst hohen Festigkeit, Kratzfestigkeit, Schlagzähigkeit oder Kerbschlagzähigkeit und geringerer Bruchneigung. Ein Fensterführungssteg steht vom eigentlichen Trägerteil ab und die genaue Dimensionierung hängt von der Geometrie des passenden Werkstücks an der Fahrzeugkarosserie ab. Der Fensterführungssteg ist bevorzugt näherungsweise L-förmig ausgebildet und weist bevorzugt im abstehenden Bereich einen Winkel von 45° bis 135° zur Grundfläche des polymeren Trägerteils auf. Der Fensterführungssteg weist bevorzugt in beiden Teilstegen des "L" eine Länge von jeweils 10 mm bis 20 mm auf. Das polymere Trägerteil umfasst des Weiteren ein Montageelement. Das Montageelement ist wie der Fensterführungssteg ein abstehendes Element des polymeren Trägerteils und bevorzugt F-förmig ausgebildet. Die genaue Formgebung des Montageelementes richtet sich dabei nach dem entsprechenden Gegenstück der Karosserie. Der Fensterführungssteg und das Montageelement sind bevorzugt aus demselben Werkstoff wie das polymere Trägerteil gefertigt und werden bevorzugt durch Formwerkzeuge mit entsprechenden Aussparungen im Spritzgussverfahren hergestellt.

Der Fensterführungssteg und/oder das Montageelement weisen eine (über das gesamte Bauteil gemittelte) Dicke von 0,5 mm bis 3 mm sowie eine erhöhte kreisförmige, ovale oder polygonale Oberflächenstruktur mit einer (gemittelten) Dicke von 0,2 mm bis 1,5 mm auf. Die erfindungsgemäße Dicke des Fensterführungsstegs und/oder das Montageelements von 0,5 mm bis 3 mm bewirkt eine effektive Wandstärkenausdünnung im Vergleich zu bekannten Bauteilen (Fensterführungssteg und/oder das Montageelement). Die derartig ausgedünnte Grundwand des Fensterführungsstegs und/oder das Montageelement werden durch eine wabenartige, kreisförmige oder polygonale erhöhte Oberflächenstruktur, besonders bevorzugt eine hexagonale erhöhte bienenwabenartige Oberflächenstruktur verstärkt. Die erhöhte Oberflächenstruktur gewährleistet auch bei Ausdünnung der Wandstärke die Stabilität und Bruchsicherheit des Fensterführungsstegs und/oder des Montageelements. Die Wandstärkenausdünnung verringert zudem das Gewicht der Säulenabdeckung.

Mit dem polymeren Trägerteil ist ein polymeres Deckteil über eine Kontaktfläche verbunden. Der Ausdruck "Kontaktfläche" beschreibt die Grenzfläche zwischen dem polymeren Trägerteil und dem polymeren Deckteil. Das polymere Deckteil kann sowohl dekorative Funktionen als auch Funktionen im Bereich der Werkzeugbeständigkeit übernehmen. Beispiele hierfür sind Oberflächen oder Beschichtungen, welche die witterungs-, UV- oder chemische Beständigkeit der Säulenabdeckung erhöhen. Das polymere Trägerteil und das polymere Deckteil bilden ein gemeinsames abgerundetes Endstück. Der Ausdruck "Endstück" bezieht sich im Sinne der Erfindung bevorzugt auf einen Bereich, in dem die Gesamtdicke aus polymerem Trägerteil und polymerem Deckteil oder deren Einzeldicken graduell oder linear abnimmt. Das polymere Trägerteil umfasst das Montageelement, bevorzugt entgegengesetzt zu dem Endstück.

Je nach Geometrie der Säulenabdeckung können noch weitere gemeinsame, bevorzugt abgerundete Endstücke vorhanden sein. Diese Kantengeometrie kann umlaufend an allen gemeinsamen Kanten vom polymeren Trägerteil und polymeren Deckteil innerhalb der Säulenabdeckung oder nur an einzelnen Bauteilkanten ausgebildet sein. Die gesamte Säulenabdeckung wird bevorzugt in einem Verfahrensschritt in einem Zwei- oder Mehrkomponenten-Spritzgussverfahren oder Mehrkomponenten-Spritzprägeverfahren hergestellt. In einem alternativen Verfahren kann das polymere Trägerteil mit Verjüngung und dem Fensterführungssteg in einem Spritzgussverfahren hergestellt werden. Das polymere Trägerteil kann anschließend mit einem ebenfalls in einem Spritzgussverfahren hergestellten polymeren Deckteil verbunden werden.

Der Fensterführungssteg und/oder das Montageelement weisen in einer optionalen Ausgestaltungsform die erhöhte Oberflächenstruktur an Bereichen des Fensterführungsstegs und/oder des Montageelements ohne Wandstärkenausdünnung, d.h. in optionalen Bereichen des Fensterführungsstegs mit einer Dicke von mehr als 3 mm auf.

An der Berührungsstelle des Fensterführungsstegs zum Trägerteil ist eine Verjüngung angeordnet. Der Ausdruck "verjüngt" bedeutet im Sinne der Erfindung eine lineare oder graduelle Abnahme der Dicke des Fensterführungsstegs, benachbart oder angrenzend zur Grundfläche des polymeren Trägerteils. Diese Abnahme der Dicke des integrierten Fensterführungsstegs gewährleistet eine verbesserte Reflexionsoptik auf der Sichtseite der Säulenabdeckung und erlaubt eine Gewichtsreduzierung der Säulenabdeckung und eine Ersparnis an polymerem Ausgangsmaterial. Die Verjüngung verjüngt sich bevorzugt von 4 mm bis 1 mm auf 2 mm bis 0,2 mm. Diese Abmessungen erlauben-eine hohe Stabilität innerhalb des Ansatzes bei gleichzeitig minimalem Gewicht.

Der Ansatz verjüngt sich bevorzugt über eine Länge von 3 mm bis 20 mm, bevorzugt 5 mm bis 10 mm auf den oben genannten Bereich. Die Verjüngung erlaubt eine Einsparung an Material und Gewicht des fertigen Bauteils.

Die erfindungsgemäße Säulenabdeckung enthält Versteifungsrippen innerhalb des verjüngten Ansatzes sowie Verstärkungsrippen im Bereich angrenzend und außerhalb des verjüngten Ansatzes. Die Versteifungsrippen weisen bevorzugt einen Abstand von 1 cm bis 15 cm, bevorzugt 2 cm bis 10 cm zueinander auf. Die so platzierten Versteifungsrippen erhöhen deutlich die Stabilität und Bruchsicherheit des Fensterführungsstegs. Der genaue Abstand der Versteifungsrippen hängt weiterhin vom verwendeten Material des polymeren Deckteils und der geforderten Stabilität der Säulenabdeckung ab.

Der Fensterführungssteg weist bevorzugt auf der der Verjüngung gegenüberliegenden Seite Verstärkungsrippen auf, welche die Stabilität des Fensterführungsstegs weiter erhöhen.

Die erhöhte Oberflächenstruktur weist bevorzugt eine Schrägstellung von 1° bis 15 ° relativ zur Senkrechten auf der Oberfläche des Fensterführungsstegs und/oder das Montageelements unterhalb der Oberflächenstruktur auf. Diese Entformungsschräge verbessert das Herauslösen des bruchempfindlichen Fensterführungsstegs und/oder das Montageelements aus der Spritzgussform.

Die Gesamtdicke aus Fensterführungsstegs und der erhöhten Oberflächenstruktur ist um den Faktor 1,2 bis 3 größer ist als die Dicke des darunterliegenden Fensterführungsstegs. Der genannte Faktor gewährleistet ein optimales Gewichts- zu Stabilitätsverhältnis des Fensterführungsstegs.

Das polymere Trägerteil enthält bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyester, Polyamide, Polyethylenterephthalat (PET), bevorzugt Acrylnitril-Butadien-Styrol (ABS), Acrylester-Styrol-Acrylnitril (ASA), Acrylnitril-Butadien-Styrol - Polycarbonat (ABS/PC) und/oder Copolymere oder Gemische davon.

Das polymere Trägerteil enthält bevorzugt anorganische oder organische Füllstoffe, besonders bevorzugt SiO₂, Al₂O₃, TiO₂, Tonmineralien, Silikate, Zeolithe, Glasfasern, Kohlenstofffasern, Glaskugeln, organische Fasern und/oder Gemische davon. Die Füllstoffe können die Stabilität des Trägerteils weiter erhöhen. Zudem können die Füllstoffe den Anteil an polymeren Materialien verringern und so die Herstellungskosten des Bauteils vermindern.

Das polymere Deckteil enthält bevorzugt Polycarbonate (PC), Polymethylmethacrylat (PMMA), Styrol-Acrylnitril (SAN) und/oder Copolymere oder Gemische davon. Diese Polymere erlauben eine Verarbeitung zu hochglänzenden, je nach Anwendungszweck teilweise glasähnlichen Oberflächen.

Das polymere Deckteil enthält bevorzugt einen Hardcoat, besonders bevorzugt thermisch- oder UV-härtende Lacke, besonders bevorzugt Polysiloxane, Polyacrylate, Polymethacrylate und/oder Gemische oder Copolymere davon. Der Hardcoat verbessert die Beständigkeit gegenüber mechanischen Kratzbeschädigungen, Witterungseinflüssen, Temperaturschwankungen, UV-Strahlung und/oder aggressiven Chemikalien aus der Luft oder dem Spritzwasser. Zusätzlich kann der Hardcoat auch noch dekorative Funktionen wahrnehmen.

Das polymere Deckteil weist bevorzugt eine mittlere optische Transparenz von mehr als 60 %, bevorzugt mehr als 80 % im Bereich von 400 nm bis 800 nm auf. Die hohe optische Transparenz verleiht dem polymeren Deckteil ein glasähnliches Aussehen bei nur geringem Eigengewicht und einer hohen Verformbarkeit.

Das Montageelement ist bevorzugt F-förmig ausgebildet. Die genaue Formgebung des Montageelementes richtet sich dabei nach dem entsprechenden Gegenstück der Karosserie.

Das Montageelement weist bevorzugt eine Dichtlippe auf. Die Dichtlippe ermöglicht einen flexiblen und abdichtenden Einbau der Säulenabdeckung im Fahrzeug.

Die erfindungsgemäße Säulenabdeckung wird bevorzugt über ein Mehrkomponenten-Spritzgießverfahren oder ein Mehrkomponenten-Spritzprägeverfahren hergestellt.

Die Erfindung umfasst des Weiteren die Verwendung der Säulenabdeckung in Fahrzeugen, bevorzugt Kraftfahrzeugen, Lastkraftwagen, Bussen, besonders bevorzugt als Zierleiste in Kraftfahrzeugen.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein.

Es zeigen:
Figur 1 einen Querschnitt einer Säulenabdeckung nach dem Stand der Technik,
Figur 2 einen Querschnitt einer bevorzugten Ausführungsform der erfindungsgemäßen Säulenabdeckung,
Figur 3 einen vergrößerten Ausschnitt des Fensterführungsstegs,
Figur 4 einen vergrößerten Ausschnitt der Oberflächenstrukturen,
Figur 5 einen Querschnitt der Oberflächenstrukturen und
Figur 6 eine dreidimensionale Ansicht einer bevorzugten Ausführungsform der Säulenabdeckung.

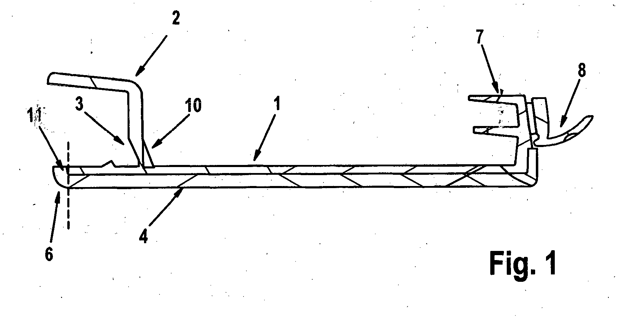

Figur 1 zeigt einen Querschnitt einer Säulenabdeckung nach dem Stand der Technik. Ein polymeres Trägerteil (1) mit einem angespritzten Fensterführungssteg (2) und einem F-förmigen Montageelement (7) mit einer Dichtlippe (8) ist von einem polymeren Deckteil (4) umgeben. Der Fensterführungssteg (2) ist über eine Verjüngung (3) mit dem polymeren Trägerteil (1) verbunden. Der Bereich des abgerundeten Endstücks (6) (links der gestrichelten Linie) geht fließend entlang der Kontaktfläche (11) in das polymere Trägerteil (1) und das polymere Deckteil (4) über. Das polymere Deckteil (4) umschließt im abgerundeten Endstück (6) das polymere Trägerteil (1). Aufgrund unterschiedlicher Materialien des polymeren Deckteils (4) und des polymeren Trägerteils (1) kann es beim Abkühlen nach einem 2-Komponentenspritzgussprozess zu optischen Verzerrungen und zu einer unregelmäßigen Phasengrenze an der Kontaktfläche (11) kommen.

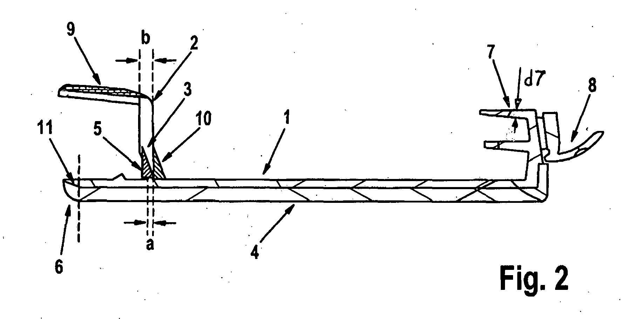

Figur 2 zeigt einen schematischen Querschnitt einer bevorzugten Ausführungsform der erfindungsgemäßen Säulenabdeckung. Der Grundaufbau aus polymerem Trägerteil (1) mit Fensterführungssteg (2), F-förmigem Montageelement (7) mit einer Dichtlippe (8), polymerem Deckteil (4) entspricht dem in Figur 1 gezeigten. Der Fensterführungssteg (2) weist noch innerhalb der Verjüngung (3) angebrachte Versteifungsrippen (5) und außerhalb der Verjüngung (3) angebrachte Verstärkungsrippen (10) auf. Der Fensterführungssteg (2) nimmt innerhalb der Verjüngung (3) vom größeren Ausgangsdurchmesser (b) auf den kleineren Durchmesser (a) ab. Auf der Oberfläche des Fensterführungsstegs (2) sind erfindungsgemäße Oberflächenstrukturen (9) angeordnet. Die Verstärkungsrippe (10) und vor allem die Oberflächenstrukturen (9) erhöhen die Stabilität und Bruchfestigkeit des Fensterführungsstegs (2).

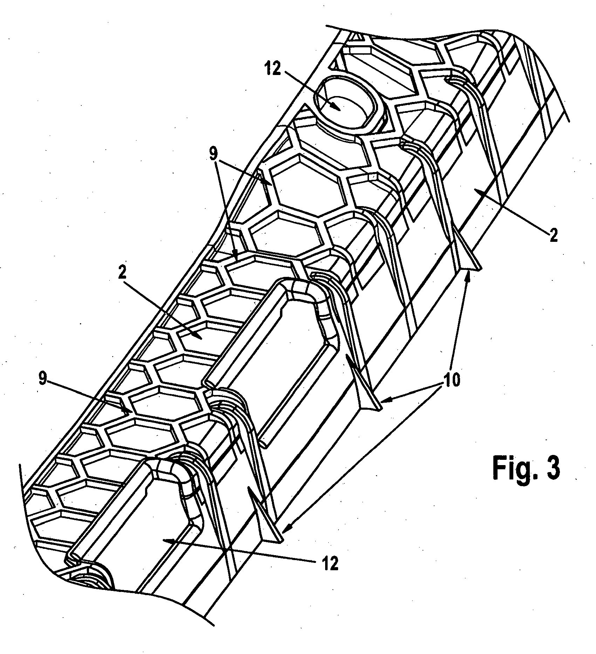

Figur 3 zeigt einen vergrößerten Ausschnitt des Fensterführungsstegs (2). Auf der Oberfläche des Fensterführungsstegs (2) sind hexagonale, bienenwabenartige Oberflächenstrukturen (9) angeordnet. Die Oberflächenstrukturen (9) und Verstärkungsrippen (10) erhöhen deutlich Stabilität und Belastbarkeit des Fensterführungsstegs (2). Verschiedene Öffnungen (12) senken zusätzlich das Eigengewicht und Materialkosten des Fensterführungsstegs (2).

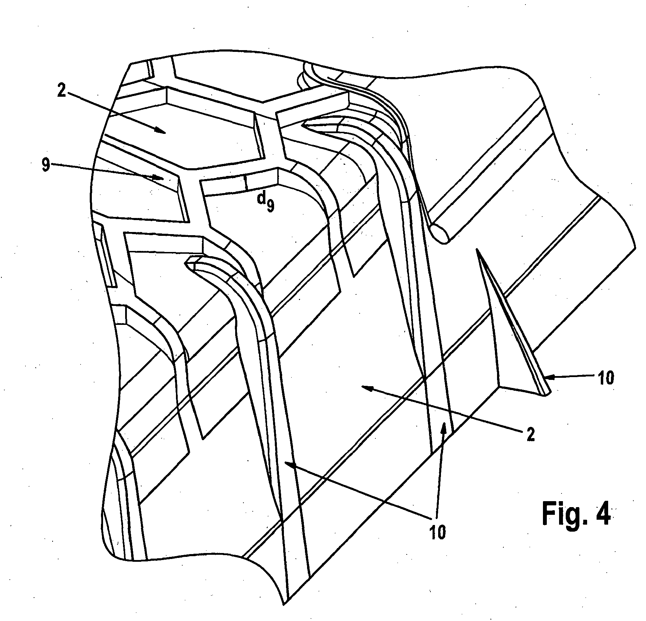

Figur 4 zeigt einen weiter vergrößerten Ausschnitt des Fensterführungsstegs (2). Die Oberflächenstrukturen (9) und Verstärkungsrippen (10) sind wie in Figur 3 angeordnet.

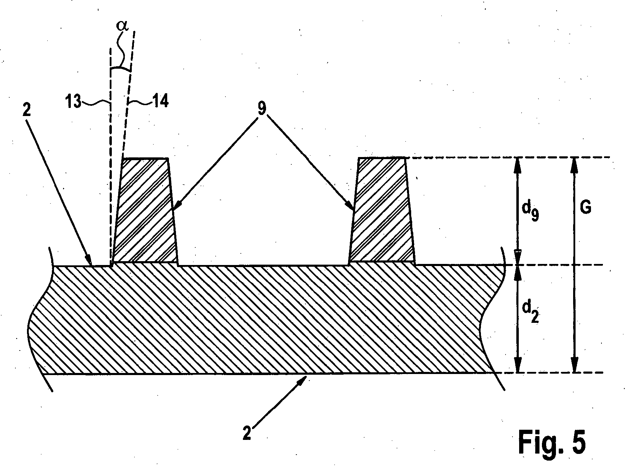

Figur 5 zeigt einen Querschnitt der Oberflächenstrukturen (9) auf dem Fensterführungssteg (2). Die Oberflächenstrukturen (9) sind um einen Winkel (Alfa) von 1°bis 15 ° gegenüber der Senkrechten (13) auf der Oberfläche des Fensterführungsstegs (2) geneigt. Die Neigung (14) der Oberflächenstrukturen (9) zur Senkrechten (13) verstärkt wesentlich die Stabilität gegenüber einem nicht geneigten Oberflächensteg (9). Weiterhin erlaubt die Neigung (14) um den Winkel (Alfa) ein besseres Herauslösen des Fensterführungsstegs (2) nach dem Aushärten im Spritzwerkzeug. Die Größe (d₉) beschreibt die Dicke der erhöhten Oberflächenstruktur (9), (d₂) die Dicke des darunterliegenden Fensterführungsstegs (2). Zudem beträgt das Verhältnis zwischen der Gesamtdicke aus d₂ plus d₉ zur Dicke d₂ [(d₂+d₉)/d₂] 1,2 bis 3.

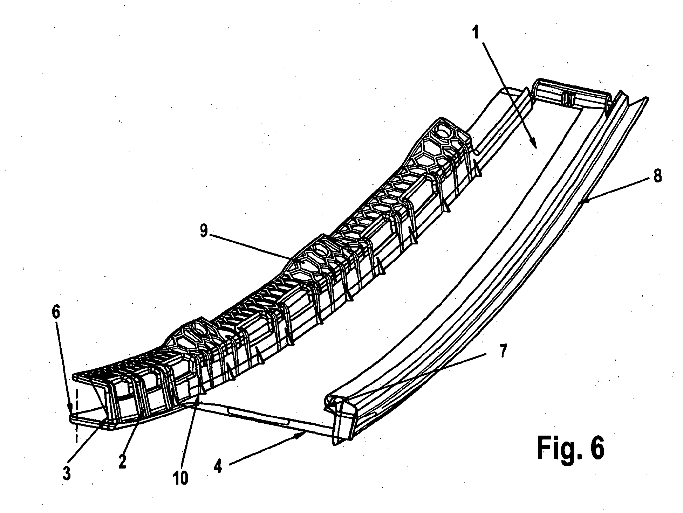

Figur 6 zeigt eine dreidimensionale Ansicht einer bevorzugten Ausführungsform der Säulenabdeckung. Der Aufbau entspricht dem in Figur 2 gezeigten. Die Verjüngung (3) ist aufgrund der Perspektive nicht zu sehen. Die erhöhten, bienenwabenartigen Verstärkungsstrukturen (9) sind in Form von regelmäßigen Sechsecken flächendeckend auf der Oberfläche des Fensterführungsstegs (2) angeordnet. Die Verstärkungsstrukturen (9) verstärken den Fensterführungssteg (2) und erlauben die Reduzierung der Wandstärke des Fensterführungsstegs (2). Die Oberflächenstrukturen (9) erleichtern zusätzlich während des Herstellungsprozesses das Entformen oder das Herauslösen der erfindungsgemäßen Säulenabdeckung aus einem Spritzgießwerkzeug. Die Verstärkungsrippen (10) bewirken eine weitere Stabilisierung des Fensterführungsstegs und können sowohl in regelmäßigem als auch unregelmäßigem Abstand an der Außenseite des Fensterführungsstegs (2) angeordnet werden. Der Bereich des Endstücks (6) ist links der gestrichelten Linie angedeutet.

### Bezugszeichenliste

- (1): Trägerteil
- (2): Fensterführungssteg
- (3): Verjüngung
- (4): Deckteil
- (5): Versteifungsrippen
- (6): Endstück
- (7): Montageelement
- (8): Dichtlippe
- (9): Oberflächenstruktur
- (10): Verstärkungsrippen
- (11): Kontaktfläche zwischen Trägerteil und Deckteil
- (12): Öffnungen im Fensterführungssteg
- (13): Senkrechte auf der Oberfläche des Fensterführungsstegs
- (14): Neigung der Oberflächenstrukturen zur Senkrechten
- (α): Winkel zwischen der Neigung der Oberflächenstrukturen und der Senkrechten auf der Oberfläche des Fensterführungsstegs
- (G): Gesamtdicke aus dem Fensterführungssteg und der Oberflächenstruktur
- (d₂): Dicke des Fensterführungsstegs
- (d₇): Dicke des Montageelements
- (d₉): Dicke der Oberflächenstruktur

## Patentansprüche

1. Säulenabdeckung für Fahrzeuge mindestens umfassend:
a. ein Trägerteil (1) mit einem abstehenden integrierten Fensterführungssteg (2) und einem abstehenden Montageelement (7),
b. eine erhöhte kreisförmige, ovale oder polygonale Oberflächenstruktur (9) auf dem Fensterführungssteg (2) und/oder dem Montageelement (7), **gekennzeichnet durch**
c. ein mit dem Trägerteil (1) über eine Kontaktfläche (11) verbundenes polymeres Deckteil (4), wobei
d. der Fensterführungssteg (2) und/oder das Montageelement (7) eine Dicke (d₂; d₇) von 0,5 mm bis 3 mm und die erhöhte kreisförmige, ovale oder polygonale Oberflächenstruktur (9) eine Dicke (d₉) von 0,2 mm bis 1,5 mm aufweisen,
wobei an der Berührungsstelle des Fensterführungsstegs (2) zum Trägerteil (1) eine Verjüngung (3) angeordnet ist, wobei innerhalb der Verjüngung (3) Versteifungsrippen (5) angebracht sind, und wobei die Gesamtdicke (G) des Fensterführungsstegs (2) und der Oberflächenstruktur (9) um den Faktor 1,2 bis 3 größer ist als die Dicke (d₂) des darunterliegenden Fensterführungsstegs (2).

2. Säulenabdeckung nach Anspruch 1, wobei die Verjüngung (3) sich von 1 mm bis 4 mm auf 0,2 mm bis 2 mm verjüngt.

3. Säulenabdeckung nach einem der Ansprüche 1 bis 2, wobei die erhöhte Oberflächenstruktur (9) eine wabenartige erhöhte Oberflächenstruktur, besonders bevorzugt eine hexagonal erhöhte Oberflächenstruktur umfasst.

4. Säulenabdeckung nach einem der Ansprüche 1 bis 3, wobei die erhöhte Oberflächenstruktur (9) eine Schrägstellung (α) von 1° bis 15° relativ zur Senkrechten (13) der darunterliegenden Oberfläche des Fensterführungsstegs (2) aufweist.

5. Säulenabdeckung nach einem der Ansprüche 1 bis 4, wobei das Trägerteil (1) Polyethylen (PE), Polycarbonate (PC), Polypropylen (PP), Polystyrol, Polybutadien, Polynitrile, Polyester, Polyurethane, Polymethylmethacrylate, Polyacrylate, Polyester, Polyamide, Polyethylenterephthalat, bevorzugt Acrylnitril-Butadien-Styrol (ABS), Acrylester-Styrol-Acrylnitril (ASA), Acrylnitril-Butadien-Styrol - Polycarbonat (ABS/PC) und/oder Copolymere oder Gemische davon enthält.

6. Säulenabdeckung nach einem der Ansprüche 1 bis 5, wobei das Trägerteil (1) anorganische oder organische Füllstoffe, bevorzugt SiO₂, Al₂O₃, TiO₂, Tonmineralien, Silikate, Zeolithe, Glasfasern, Kohlenstofffasern, Glaskugeln, organische Fasern und/oder Gemische davon enthält.

7. Säulenabdeckung nach einem der Ansprüche 1 bis 6, wobei das Deckteil (4) Polycarbonate (PC), Polymethylmethacrylat (PMMA), Styrol-Acrylnitril (SAN) und/oder Copolymere oder Gemische davon enthält.

8. Säulenabdeckung nach einem der Ansprüche 1 bis 7, wobei das Deckteil (4) einen Hardcoat, bevorzugt thermisch- oder UV-härtende Lacke, besonders bevorzugt Polysiloxane, Polyacrylate, Polymethacrylate und/oder Gemische oder Copolymere davon enthält.

9. Säulenabdeckung nach einem der Ansprüche 1 bis 8, wobei das Montageelement (7) F-förmig ausgebildet ist.

10. Säulenabdeckung nach einem der Ansprüche 1 bis 9, wobei das Montageelement (7) eine Dichtlippe (8) aufweist.

11. Säulenabdeckung nach einem der Ansprüche 1 bis 10, wobei der Fensterführungssteg (2) Verstärkungsrippen (10) aufweist.

12. Verwendung der Säulenabdeckung nach einem der Ansprüche 1 bis 11 in Fahrzeugen, bevorzugt Kraftfahrzeugen, Lastkraftwagen, Bussen, besonders bevorzugt als Zierleiste in Kraftfahrzeugen.

## Claims

1. Pillar covering for vehicles comprising at least:
a. a carrier part (1) with a protruding integrated window guide web (2) and a protruding mounting element (7),
b. a raised circular, oval, or polygonal surface structure (9) on the window guide web (2) and/or the mounting element (7), **characterized by**
c. a polymer cover part (4) connected to the carrier part (1) via a contact surface (11), wherein
d. the window guide web (2) and/or the mounting element (7) has a thickness (d₂; d₇) of 0.5 mm to 3 mm, and the raised circular, oval, or polygonal surface structure (9) has a thickness (d₉) of 0.2 mm to 1.5 mm, wherein a narrowing (3) is disposed at the point of contact of the window guide web (2) with the carrier part (1), wherein stiffening ribs (5) are fitted inside the narrowing (3), and wherein the total thickness (G) of the window guide web (2) and of the surface structure (9) is greater by a factor of 1.2 to 3 than the thickness (d₂) of the underlying window guide web (2).

2. Pillar covering according to claim 1, wherein the narrowing (3) tapers from 1 mm to 4 mm down to 0.2 mm to 2 mm.

3. Pillar covering according to one of claims 1 through 2, wherein the raised surface structure (9) comprises a honeycomb-like raised surface structure, particularly preferably a hexagonally raised surface structure.

4. Pillar covering according to one of claims 1 through 3, wherein the raised surface structure (9) has a tilt (α) of 1° to 15 ° relative to the perpendicular (13) of the underlying surface of the window guide web (2).

5. Pillar covering according to one of claims 1 through 4, wherein the carrier part (1) contains polyethylene (PE), polycarbonates (PC), polypropylene (PP), polystyrene, polybutadiene, polynitriles, polyesters, polyurethanes, polymethyl methacrylates, polyacrylates, polyesters, polyamides, polyethylene terephthalate, preferably acrylonitrile-butadiene-styrene (ABS), acrylester-styrene-acrylonitrile (ASA), acrylonitrile-butadiene-styrene - polycarbonate (ABS/PC), and/or copolymers or mixtures thereof.

6. Pillar covering according to one of claims 1 through 5, wherein the carrier part (1) contains inorganic or organic fillers, preferably SiO₂, Al₂O₃, TiO₂, clay minerals, silicates, zeolites, glass fibers, carbon fibers, glass beads, organic fibers, and/or mixtures thereof.

7. Pillar covering according to one of claims 1 through 6, wherein the cover part (4) contains polycarbonates (PC), polymethyl methacrylate (PMMA), styrene-acrylonitrile (SAN), and/or copolymers or mixtures thereof.

8. Pillar covering according to one of claims 1 through 7, wherein the cover part (4) includes a hard coat, preferably a thermal- or UV-curing coating, particularly preferably polysiloxanes, polyacrylates, polymethacrylates, and/or mixtures or copolymers thereof.

9. Pillar covering according to one of claims 1 through 8, wherein the mounting element (7) is configured F-shaped.

10. Pillar covering according to one of claims 1 through 9, wherein the mounting element (7) has a sealing lip (8).

11. Pillar covering according to one of claims 1 through 10, wherein the window guide web (2) has reinforcing ribs (10).

12. Use of the pillar covering according to one of claims 1 through 11 in vehicles, preferably motor vehicles, trucks, buses, particularly preferably as a trim strip in motor vehicles.

## Revendications

1. Habillage de montant pour véhicules comprenant au moins :
a. un élément de support (1) avec un montant de guide-vitre (2) intégré en saillie et un élément d'assemblage (7) en saillie,
b. une structure de surface (9) surélevée circulaire, ovale ou polygonale sur le montant de guide-vitre (2) et/ou l'élément d'assemblage (7), **caractérisé par**
c. un élément de couverture (4) polymérique associé à l'élément de support (1) par une surface de contact (11), où
d. le montant de guide-vitre (2) et/ou l'élément d'assemblage (7) présentent une épaisseur (d₂ ; d₇) de 0,5 mm à 3 mm et la structure de surface (9) surélevée circulaire, ovale ou polygonale ont une épaisseur de 0,2 mm à 1,5 mm (d₉),
où un rétrécissement (3) est disposé au point de contact entre le montant de guide-vitre (2) et l'élément de support (1), où des nervures de rigidification (5) sont montées à l'intérieur du rétrécissement (3), et où l'épaisseur totale (G) du montant de guide-vitre (2) et de la structure de surface (9) est supérieure par un facteur de 1,2 à 3 à l'épaisseur (d₂) du montant de guide-vitre (2) sous-jacent.

2. Habillage de montant selon la revendication 1, où le rétrécissement (3) s'effile de 1 mm à 4 mm à 0,2 mm à 2 mm.

3. Habillage de montant selon l'une des revendications 1 ou 2, où la structure de surface surélevée (9) comprend une structure de surface surélevée alvéolaire, de préférence une structure de surface sur élevé hexagonale.

4. Habillage de montant selon l'une des revendications 1 à 3, où la structure de surface élevée (9) présente un angle (α) de 1° à 15 ° par rapport à la verticale (13) de la surface sous-jacente du montant de guide-vitre (2).

5. Habillage de montant selon l'une des revendications 1 à 4, où l'élément de support (1) contient du polyéthylène (PE), du polycarbonate (PC), du polypropylène (PP), du polystyrène, du polybutadiène, des polynitriles, du polyester, du polyuréthane, du polyméthacrylate de méthyle, du polyacrylate, du polyester, des polyamides, du polyéthylène téréphtalate, de préférence de acrylonitrile-butadiène-styrène (ABS) de l'acrylonitrile-styrène-acrylate (ASA), acrylonitrile-butadiène-styrène - contenant du polycarbonate (PC/ABS) et/ou les copolymères ou mélanges de ceux-ci.

6. Habillage de montant selon l'une des revendications 1 à 5, où l'élément de support (1) contient des matières de remplissage organiques ou inorganiques, de préférence du SiO₂, du Al₂O₃, TiO₂, des minéraux argileux, des silicates, des zéolites, des fibres de verre, des fibres de carbone, des billes de verre, des fibres organiques et/ou des mélanges de ceux-ci.

7. Habillage de montant selon l'une des revendications 1 à 6, où le couvercle (4) contient du polycarbonate (PC), du polyméthacrylate de méthyle (PMMA), du styrène-acrylonitrile (SAN) et/ou les copolymères ou mélanges de ceux-ci.

8. Habillage de montant selon l'une des revendications 1 à 7, où le couvercle (4) contient un revêtement dur, de préférence des revêtements thermodurcissables ou à durcissement UV, de façon particulièrement préférée des polysiloxanes, des polyacrylates, des polymethacrylates et/ou des mélanges ou copolymères de ceux-ci.

9. Habillage de montant selon l'une des revendications 1 à 8, où l'élément d'assemblage (7) est formé en F.

10. Habillage de montant selon l'une des revendications 1 à 9, où l'élément d'assemblage (7) présente une lèvre d'étanchéité (8).

11. Habillage de montant selon l'une des revendications 1 à 10, où le montant de guide-vitre (2) présente des nervures (10) de .

12. Utilisation de l'habillage de montant selon l'une des revendications 1 à 11 dans des véhicules, de préférence les véhicules automobiles, des poids lourds, des bus, de façon particulièrement préférée comme garniture décorative dans les véhicules.
